# EUROPÄISCHE PATENTSCHRIFT

(11) **EP 2 646 676 B1**
(45) Veröffentlichungstag und Bekanntmachung des Hinweises auf die Patenterteilung: **14.09.2016**
(21) Anmeldenummer: 11764691.9
(22) Anmeldetag: 04.10.2011
(51) Int. Cl.: F02M 55/04, F02M 37/00, F16L 55/027

(54) **FLUID-PULSATIONSDÄMPFER**
FLUID PULSATION DAMPER
AMORTISSEUR DE PULSATIONS À FLUIDE

(30) Priorität: 04.12.2010 DE 102010053502
(43) Veröffentlichungstag der Anmeldung: 09.10.2013
(73) Patentinhaber: Volkswagen Aktiengesellschaft, 38440 Wolfsburg (DE)
(72) Erfinder: KOCH, Christian, 38524 Triangel (DE); ARNHOLD, Jörg, 39175 Königsborn (DE); BOLE, Klaus, 38108 Braunschweig (DE); BEINLICH, Thomas, 38442 Wolfsburg (DE); RECKWELL, Christine, 38154 Königslutter (DE); JUZNIK, Michael, 38110 Braunschweig (DE); MOLLER, Simon, 38557 Osloss (DE); WLOKA, Carmen, 38444 Wolfsburg (DE); MONECKE, Uwe, 39124 Magdeburg (DE)
(86) Internationale Anmeldenummer: PCT/EP2011/004962
(87) Internationale Veröffentlichungsnummer: WO 2012/072159

(56) Entgegenhaltungen:
- EP-A1- 0 561 502
- WO-A2-2010/003052
- DE-A1- 10 061 188
- DE-A1- 19 633 852

## Beschreibung

Die Erfindung betrifft einen Fluid-Pulsationsdämpfer, insbesondere Kraftstoff-Pulsationsdämpfer, mit einer Fluidleitung, durch welche ein Fluid, insbesondere Kraftstoff, strömt, wobei mindestens eine Kammer vorgesehen ist, durch die die Fluidleitung verläuft und in der die Fluidleitung unterbrochen ist, wobei in die Kammer ein erster Leitungsabschnitt der Fluidleitung einmündet sowie mit einer ersten Öffnung in der Kammer endet und in die ein zweiter Leitungsabschnitt der Fluidleitung einmündet sowie mit einer zweiten Öffnung in der Kammer endet, gemäß dem Oberbegriff des Patentanspruchs 1.

Druckpulsationen durch eine Hochdruckpumpe führen beispielsweise in einer Kraftstoffleitung einer Brennkraftmaschine zu Frequenzüberhöhungen und Resonanzerscheinungen, in deren Folge unerwünschte akustische Geräuschemissionen entstehen.

In der DE 10 2004 001 214 A1 wird ein Pulsationsdämpfer als vorbekannt beschrieben, welcher Druckspitzen gegen ein Gasvolumen dämpft, welches unter einem auf die Pulsationsamplitude ausgelegten Druck steht. Dabei ist das Gasvolumen von dem durchströmenden Medium durch eine Membran getrennt. Derartige Pulsationsdämpfer werden als Nachteilig beschrieben, da ggf. eine Kraftstoffeinspritzleistung in ungewollter Weise schwankt und unangenehme Geräusche und Vibrationen entstehen. Weiterhin werden hohe Kosten für jeweils individuell zu konstruierenden Dämpfer als Nachteilig genannt. Daher wird in der DE 10 2004 001 214 A1 vorgeschlagen zur Druckdämpfung in einer Kraftstoffleitung wenigstens eine Drossel anzuordnen, welche derart bemessen ist, dass eine maximale Pulsationsgröße während des Betriebs des Systems deutlich auf einen Wert begrenzt wird.

Aus der gattungsgemäßen DE 196 33 852 A1 ist ein Kraftstoffpulsationsdämpfer bekannt, welcher zwei Kammern aufweist. Eine erste Kammer dient zum Zuführen und Abführen von Kraftstoff und zum Dämpfen von Pulsationen. Eine zweite Kammer dient zum Abführen von Luft und Dampf, wenn sich der Kraftstoffpulsationsdämpfer mit Kraftstoff füllt. In beiden Kammern stellt sich ein vorbestimmter Kraftstoffpegel ein, welcher eine ausreichende Kraftstoffversorgung von stromab des Kraftstoffpulsationsdämpfer angeordneten Kraftstoffinjektoren sicher stellt.

Aus der DE 10 2006 037179 A1 ist ein Druckschwingungsdämpfer mit einem rohrförmigen Leitungsabschnitt zur Hindurchführung von Kraftstoff bekannt, wobei in dem Leitungsabschnitt wenigstens eine radiale Drosselbohrung zur Ableitung von Kraftstoff in einen Kraftstoffdämpfungsraum, welcher den Leitungsabschnitt umgibt, ausgebildet ist.

Der Erfindung liegt die Aufgabe zugrunde, Druckpulsationen im Kraftstoffsystem zu reduzieren.

Diese Aufgabe wird erfindungsgemäß durch einen Fluid-Pulsationsdämpfer der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Fluid-Pulsationsdämpfer der o.g. Art erfindungsgemäß vorgesehen, dass die Kammer abgesehen von den einmündenden Leitungsabschnitten geschlossen ist, die erste und zweite Öffnung einem Boden der Kammer zugewandt sind, welcher in einer Betriebslage des Fluid-Pulsationsdämpfers im Raum mindestens mit einem Abschnitt geodätisch tiefer angeordnet ist als die erste und die zweite Öffnung, wobei eine dem Boden der Kammer gegenüberliegende Oberseite der Kammer in einer Betriebslage des Fluid-Pulsationsdämpfers im Raum mindestens mit einem Abschnitt geodätisch höher angeordnet ist als die erste und die zweite Öffnung.

Dies hat den Vorteil, dass beim Einströmen von Fluid in die Kammer ein vorbestimmtes Luftvolumen von dem Fluid in der Kammer eingeschlossen wird, so dass dieses eingeschlossenen Luftvolumen als Dämpfungsvolumen zum Dämpfen von Druckpulsationen wirkt. Das Luftvolumen stellt sich entsprechend einem Systemdruck selbsttätig ein. Für die gewünschte Funktion der Pulsationsdämpfung ist somit eine Membran für die Pulsationsdämpfung nicht mehr zwingend erforderlich, so dass sich eine einfache und kostengünstige Konstruktion des Dämpfers ergibt.

Einen besonders guten Einschluss von Luft innerhalb der Kammer durch das Fluid erzielt man dadurch, dass in einer Betriebslage des Fluid-Pulsationsdämpfers eine Querschnittsfläche der ersten und/oder zweiten Öffnung im Wesentlichen senkrecht zu einer Schwerkraftrichtung angeordnet ist.

Eine noch bessere Verteilung von Druckpulsationen mit entsprechend verbesserter Dämpfung derselben erzielt man dadurch, dass die Kammer in zwei oder mehr Teilkammern aufgeteilt ist.

Dadurch, dass das Volumen der Kammer mindestens teilweise mit einem offenzelligen Werkstoff, insbesondere Schaumstoff, ausgekleidet ist, wird eine Strömung in der Kammer reduziert und damit ein unerwünschtes Auswaschen der eingeschlossenen Luft verhindert.

Einen besonders wirkungsvollen Schutz gegen das Auswaschen von eingeschlossener Luft aus der Kammer durch die Strömungsbewegung des Fluids erzielt man dadurch, dass der offenzellige Werkstoff ein Volumen der Kammer auskleidet, welches sich zwischen der ersten und zweiten Öffnung sowie der Oberseite der Kammer befindet.

Ein vollständiges Einschließen eines Luftvolumens als Dämpfungsvolumen erzielt man dadurch, dass in der Kammer mindestens eine Membran zwischen der ersten bzw. zweiten Öffnung einerseits und der Oberseite der Kammer andererseits derart angeordnet und ausgebildet ist, dass die Membran ein vorbestimmtes Volumen der Kammer von der Fluidströmung abtrennt.

Eine Dämpfung durch in einem Werkstoff eingeschlossenes Fluid bzw. eingeschlossene Luft erzielt man dadurch, dass das Volumen der Kammer mindestens teilweise mit einem geschlossenzelligen Werkstoff ausgekleidet ist.

Eine Aufrechterhaltung der Dämpfungsfunktion auch bei Auswaschung von nicht in dem geschlossenzelligen Werkstoff eingeschlossener Luft bzw. eingeschlossenem Fluid durch eine Verformung des mit Fluid bzw. Luft gefüllten geschlossenzelligen Werkstoffes erzielt man dadurch, dass der geschlossenzellige Werkstoff ein Volumen der Kammer auskleidet, welches sich zwischen der ersten und zweiten Öffnung sowie der Oberseite der Kammer befindet.

Die Erfindung wird im Folgenden anhand der Zeichnung näher erläutert. Diese zeigt in
- Fig. 1: eine schematische Schnittansicht einer ersten bevorzugten Ausführungsform eines erfindungsgemäßen Fluid-Pulsationsdämpfers,
- Fig. 2: eine schematische Schnittansicht einer zweiten bevorzugten Ausführungsform eines erfindungsgemäßen Fluid-Pulsationsdämpfers,
- Fig. 3: eine schematische Schnittansicht einer dritten bevorzugten Ausführungsform eines erfindungsgemäßen Fluid-Pulsationsdämpfers und
- Fig. 4: eine schematische Schnittansicht einer vierten bevorzugten Ausführungsform eines erfindungsgemäßen Fluid-Pulsationsdämpfers

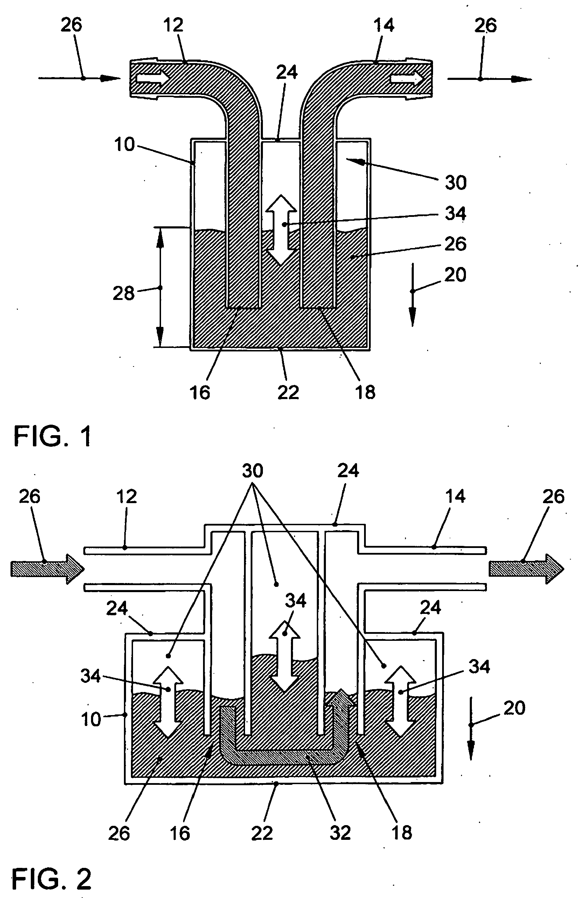

Die in Fig. 1 dargestellte, erste bevorzugte Ausführungsform eines erfindungsgemäßen Fluid-Pulsationsdämpfers umfasst eine Kammer 10 und eine Fluidleitung, welche einen ersten Leitungsabschnitt 12 und einen zweiten Leitungsabschnitt 14 aufweist. Der erste Leitungsabschnitt 12 führt in die Kammer 10 hinein und mündet mit einer ersten Öffnung 16 in die Kammer 10. Der zweite Leitungsabschnitt 14 führt ebenfalls in die Kammer 10 hinein und mündet mit einer zweiten Öffnung 18 in die Kammer 10. Auf diese Weise verläuft die Fluidleitung durch die Kammer 10 hindurch, ist jedoch innerhalb der Kammer 10 unterbrochen. Die Kammer 10 ist abgesehen von den Leitungsabschnitten 12, 14 geschlossen, d.h. die Kammer 10 weist außer den Leitungsabschnitten 12, 14 keine weiteren Öffnungen auf, die einen Innenraum der Kammer 10 mit der Umgebung fluidleitend verbinden. Die einzigen fluidleitenden Verbindungen des Innenraumes der Kammer 10 nach außen bzw. mit der Umgebung verlaufen über die Leitungsabschnitte 12, 14.

In der Fig. 1 ist der Fluid-Pulsationsdämpfers in seiner Betriebslage dargestellt, bei der eine Schwerkraftrichtung 20 in der Fig. 1 nach unten gerichtet ist. Die Öffnungen 16, 18 sind einem Boden 22 der Kammer zugewandt, welcher sich an einer geodätisch tiefsten Stelle befindet. Querschnittsflächen der Öffnungen 16, 18 sind im Wesentlichen senkrecht zur Schwerkraftrichtung 20 ausgerichtet. Die Öffnungen 16, 18 befinden sich bezüglich des Bodens 22 geodätisch höher und bezüglich einer dem Boden 22 gegenüberliegenden Oberseite 24 der Kammer 10 geodätisch tiefer.

Fluid 26, wie beispielsweise Kraftstoff, strömt über den ersten Leitungsabschnitt 12 und die erste Öffnung 16 in die Kammer 10 ein und über den zweiten Leitungsabschnitt 14 und die zweite Öffnung 18 wieder aus der Kammer 10 aus. Hierbei stellt sich in Abhängigkeit von einem Druck des Fluids ein Pegel 28 in der Kammer 10 ein. Gleichzeitig ergibt sich durch die Anordnung der Öffnungen 16, 18 in der Kammer 10 ein von dem Fluid 26 eingeschlossenen Luftvolumen 30. Dieses wirkt als Dämpfungsvolumen und dämpft in dem Fluid 16 ggf. auftretende Druckspitzen bzw. Druckpulsationen, wie mit Doppelpfeil 34 angedeutet.

Fig. 2 zeigt eine zweite bevorzugte Ausführungsform eines erfindungsgemäßen Fluid-Pulsationsdämpfers, wobei funktionsgleiche Teile mit gleichen Bezugszeichen versehen sind, wie in Fig. 1, so dass zu deren Erläuterung auf die obige Beschreibung der Fig. 1 verwiesen wird. Bei der zweiten bevorzugten Ausführungsform gemäß Fig. 2 ist im Unterschied zur ersten Ausführungsform gemäß Fig. 1 die Kammer 10 in drei Teilkammern aufgeteilt, in denen jeweils ein separates Luftvolumen 30 eingeschlossen ist. Eine Hauptflussrichtung des Fluids 26 ist mit 32 bezeichnet. Auf diese Weise erfolgt die Dämpfung, wie mit Doppelpfeilen 34 angedeutet, an drei verschiedenen Stellen mit drei voneinander getrennten Dämpfungsvolumina mit jeweiligem Luftvolumen 30. Dies verbessert die Pulsationsdämpfung entsprechend.

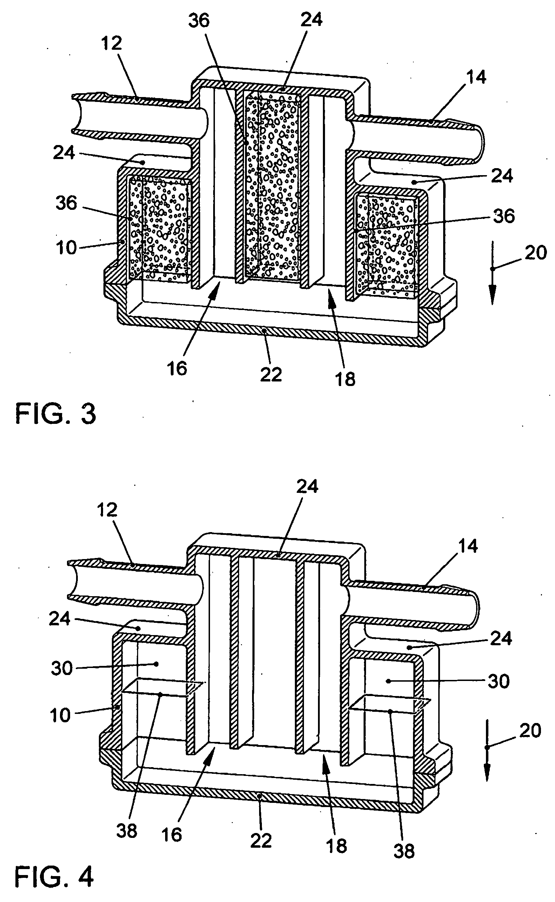

Fig. 3 zeigt eine dritte bevorzugte Ausführungsform eines erfindungsgemäßen Fluid-Pulsationsdämpfers, wobei funktionsgleiche Teile mit gleichen Bezugszeichen versehen sind, wie in Fig. 1 und 2, so dass zu deren Erläuterung auf die obige Beschreibung der Fig. 1 und 2 verwiesen wird. Im Unterschied zur zweiten Ausführungsform gemäß Fig. 2 ist das Volumen der Kammer 10 bzw. der Teilkammem geodätisch oberhalb der Öffnungen 16,18 bis zur Oberseite 24 mit einem offenzelligen Werkstoff 36 ausgekleidet. Dieser offenzellige Werkstoff ist beispielsweise ein Schaumstoff. Hierdurch werden unerwünschte Auswaschungen der Luft aus den Volumina 30 verhindert, da eine Strömung an der und benachbart zur Grenzschicht zwischen dem Fluid 26 und dem eingeschlossenen Luftvolumen 30 reduziert ist.

Alternativ oder zusätzlich ist das Volumen der Kammer 10 bzw. der Teilkammern geodätisch oberhalb der Öffnungen 16, 18 bis zur Oberseite 24 mit einem geschlossenzelligen Werkstoff (nicht dargestellt) ausgekleidet. In den geschlossenen Zellen des Werkstoffes ist ein Fluid, wie beispielsweise Luft, eingeschlossen, welches das dämpfende Polster, insbesondere Luftpolster, ausbildet. So ist auch dann noch eine Dämpfungswirkung sichergestellt, wenn außer dem geschlossenzelligen Werkstoff mit dem darin eingeschlossenen Fluid kein weiteres Fluid in der Kammer 10 bzw. den Teilkammern mehr vorhanden ist. Das "Auswaschen" der Luft bzw. des Fluids aus der Kammer 10 führt daher nicht zu einer Fehlfunktion des Fluid-Pulsationsdämpfers. Im Dämpfungsfall wird stattdessen der gesamte geschlossenzellige Werkstoff mit dem darin eingeschlossenen Fluid verformt und nimmt dadurch Druckpulsationen auf und reduziert bzw. dämpft diese.

Fig. 4 zeigt eine vierte bevorzugte Ausführungsform eines erfindungsgemäßen Fluid-Pulsationsdämpfers, wobei funktionsgleiche Teile mit gleichen Bezugszeichen versehen sind, wie in Fig. 1 bis 3, so dass zu deren Erläuterung auf die obige Beschreibung der Fig. 1 bis 3 verwiesen wird. Im Unterschied zur zweiten Ausführungsform gemäß Fig. 2 ist in zwei der drei Teilkammern der Kammer 10 jeweils eine Membran 38 angeordnet, welche das eingeschlossene Luftvolumen von dem Fluid abtrennt. Die Membran 38 ist jeweils geodätisch höher als die zur Membran 38 jeweils benachbarte Öffnung 16 bzw. 18 und geodätisch tiefer als die Oberseite 24 angeordnet.

Der erfindungsgemäße Fluid-Pulsationsdämpfer ist beispielsweise in einer Kraftstoffleitung einer Brennkraftmaschine eingebaut und wirkt dort als Kraftstoff-Pulsationsdämpfer zum Dämpfen von Pulsationen, die von einer Kraftstoffpumpe erzeugt werden.

Mit dem Ausdruck "Betriebslage des Fluid-Pulsationsdämpfer" ist eine Anordnung und Ausrichtung des Fluid-Pulsationsdämpfers im Raum relativ zur Schwerkraftrichtung 20 gemeint, bei der der Pulsationsdämpfer seine ordnungsgemäße Funktion als Dämpfer von Druckpulsationen ausübt bzw. ordnungsgemäß funktioniert. Für die ordnungsgemäße Funktion ist nämlich eine korrekte Lage der Kammer 10 relativ zur Schwerkraftrichtung 20 notwendig, damit sich die Kammer 10 vom Boden 22 her in Richtung Oberseite 24 mit Fluid füllt und das/die Luftvolumen/Luftvoluminia 30 entsprechend eingeschlossen wird/werden und als Dämpfungsvolumen wirkt/wirken. Hierzu bildet mindestens ein Teil des Bodens 10 einen geodätisch tiefsten Punkt des Volumens der Kammer 10 aus. In den dargestellten Ausführungsbeispielen bildet der gesamte Boden 22 einen geodätisch tiefsten Bereich des Volumens innerhalb der Kammer 10, wobei der Boden 22 im Wesentlichen senkrecht zu der Schwerkraftrichtung 20 ausgerichtet ist.

### Bezugszeichenliste

- 10: Kammer
- 12: erster Leitungsabschnitt
- 14: zweiter Leitungsabschnitt
- 16: erste Öffnung
- 18: zweite Öffnung
- 20: Schwerkraftrichtung
- 22: Boden der Kammer 10
- 24: Oberseite der Kammer 10
- 26: Fluid / Kraftstoff
- 28: Pegel
- 30: eingeschlossenen Luftvolumen
- 32: Hauptflussrichtung des Fluids 26
- 34: Doppelpfeil
- 36: offenzelliger Werkstoff
- 38: Membran

## Patentansprüche

1. Fluid-Pulsationsdämpfer, insbesondere Kraftstoff-Pulsationsdämpfer, mit einer Fluidleitung, durch welche ein Fluid (26), insbesondere Kraftstoff, strömt, wobei mindestens eine Kammer (10) vorgesehen ist, durch die die Fluidleitung verläuft und in der die Fluidleitung unterbrochen ist, wobei in die Kammer (10) ein erster Leitungsabschnitt (12) der Fluidleitung einmündet sowie mit einer ersten Öffnung (16) in der Kammer (10) endet und in die ein zweiter Leitungsabschnitt (14) der Fluidleitung einmündet sowie mit einer zweiten Öffnung (18) in der Kammer (10) endet, wobei ein Boden (22) in einer Betriebslage des Fluid-Pulsationsdämpfers im Raum mindestens mit einem Abschnitt geodätisch tiefer angeordnet ist, als die erste und die zweite Öffnung (16, 18), und wobei eine dem Boden (22) der Kammer (10) gegenüberliegende Oberseite (24) der Kammer (10) in einer Betriebslage des Fluid-Pulsationsdämpfers im Raum mindestens mit einem Abschnitt geodätisch höher angeordnet ist, als die erste und die zweite Öffnung (16, 18), **dadurch gekennzeichnet, dass** die Kammer (10) abgesehen von den einmündenden Leitungsabschnitten (12, 14) geschlossen ist, und die erste und zweite Öffnung (16, 18) der durch die Kammer (10) verlaufenden Fluidleitung dem Boden (22) der Kammer (10) zugewandt sind.

2. Fluid-Pulsationsdämpfer nach Anspruch 1, **dadurch gekennzeichnet, dass** in einer Betriebslage des Fluid-Pulsationsdämpfers eine Querschnittsfläche der ersten und/oder zweiten Öffnung (16, 18) im Wesentlichen senkrecht zu einer Schwerkraftrichtung (20) angeordnet ist.

3. Fluid-Pulsationsdämpfer nach mindestens einem der vorhergehenden Ansprüche, **dadurch gekennzeichnet, dass** die Kammer (10) in zwei oder mehr Teilkammern aufgeteilt ist.

4. Fluid-Pulsationsdämpfer nach mindestens einem der vorhergehenden Ansprüche, **dadurch gekennzeichnet, dass** das Volumen der Kammer (10) mindestens teilweise mit einem offenzelligen Werkstoff (36), insbesondere Schaumstoff, ausgekleidet ist.

5. Fluid-Pulsationsdämpfer nach Anspruch 4, **dadurch gekennzeichnet, dass** der offenzellige Werkstoff (36) ein Volumen der Kammer (10) auskleidet, welches sich zwischen der ersten und zweiten Öffnung (16, 18) sowie der Oberseite (24) der Kammer (10) befindet.

6. Fluid-Pulsationsdämpfer nach mindestens einem der vorhergehenden Ansprüche, **dadurch gekennzeichnet, dass** in der Kammer (10) mindestens eine Membran (38) zwischen der ersten bzw. zweiten Öffnung (16, 18) einerseits und der Oberseite (24) der Kammer (10) andererseits derart angeordnet und ausgebildet ist, dass die Membran (38) ein vorbestimmtes Volumen (30) der Kammer (10) von dem Fluid (26) abtrennt.

7. Fluid-Pulsationsdämpfer nach mindestens einem der vorhergehenden Ansprüche, **dadurch gekennzeichnet, dass** das Volumen der Kammer (10) mindestens teilweise mit einem geschlossenzelligen Werkstoff ausgekleidet ist.

8. Fluid-Pulsationsdämpfer nach Anspruch 7, **dadurch gekennzeichnet, dass** der geschlossenzellige Werkstoff ein Volumen der Kammer (10) auskleidet, welches sich zwischen der ersten und zweiten Öffnung (16, 18) sowie der Oberseite (24) der Kammer (10) befindet.

## Claims

1. Fluid pulsation damper, in particular fuel pulsation damper, having a fluid line, through which a fluid (26), in particular fuel, flows, at least one chamber (10) being provided, through which the fluid line runs and in which the fluid line is interrupted, a first line section (12) of the fluid line opening into the chamber (10) and ending with a first opening (16) in the chamber (10), and into which a second line section (14) of the fluid line opens and ends with a second opening (18) in the chamber (10), a bottom (22) being arranged, in an operating position of the fluid pulsation damper, in a geodetically lower position spatially at least with one section than the first and the second opening (16, 18), and an upper side (24) of the chamber (10) which lies opposite the bottom (22) of the chamber (10) being arranged, in an operating position of the fluid pulsation damper, in a geodetically higher position spatially at least with one section than the first and the second opening (16, 18), **characterized in that** the chamber (10) is closed apart from the opening line sections (12, 14), and the first and second opening (16, 18) of the fluid line which runs through the chamber (10) face the bottom (22) of the chamber (10).

2. Fluid pulsation damper according to Claim 1, **characterized in that**, in an operating position of the fluid pulsation damper, a cross-sectional area of the first and/or second opening (16, 18) is arranged substantially perpendicularly with respect to a direction of gravity (20).

3. Fluid pulsation damper according to at least one of the preceding claims, **characterized in that** the chamber (10) is divided into two or more part chambers.

4. Fluid pulsation damper according to at least one of the preceding claims, **characterized in that** the volume of the chamber (10) is lined at least partially with an open-cell material (36), in particular foam.

5. Fluid pulsation damper according to Claim 4, **characterized in that** the open-cell material (36) lines a volume of the chamber (10) which is situated between the first and second opening (16, 18) and the upper side (24) of the chamber (10).

6. Fluid pulsation damper according to at least one of the preceding claims, **characterized in that**, in the chamber (10), at least one diaphragm (38) is arranged and configured between the first and/or second opening (16, 18) on one side and the upper side (24) of the chamber (10) on the other side in such a way that the diaphragm (38) separates a predefined volume (30) of the chamber (10) from the fluid (26).

7. Fluid pulsation damper according to at least one of the preceding claims, **characterized in that** the volume of the chamber (10) is lined at least partially with a closed-cell material.

8. Fluid pulsation damper according to Claim 7, **characterized in that** the closed-cell material lines a volume of the chamber (10) which is situated between the first and second opening (16, 18) and the upper side (24) of the chamber (10).

## Revendications

1. Amortisseur de pulsations de fluide, en particulier amortisseur de pulsations de carburant, comprenant une conduite fluidique à travers laquelle s'écoule un fluide (26), en particulier du carburant, au moins une chambre (10) étant prévue, à travers laquelle s'étend la conduite fluidique, et dans laquelle la conduite fluidique est interrompue, une première portion de conduite (12) de la conduite fluidique débouchant dans la chambre (10) et se terminant par une première ouverture (16) dans la chambre (10) et une deuxième portion de conduite (14) de la conduite fluidique débouchant dans la chambre et se terminant par une deuxième ouverture (18) dans la chambre (10), un fond (22) dans une position de fonctionnement de l'amortisseur de pulsations de fluide étant orienté dans l'espace au moins avec une portion plus basse géodésiquement que la première et la deuxième ouverture (16, 18) et un côté supérieur (24) de la chambre (10), opposé au fond (22) de la chambre (10), dans une position de fonctionnement de l'amortisseur de pulsations de fluide, étant disposé dans l'espace au moins avec une portion plus haute géodésiquement que la première et la deuxième ouverture (16, 18), **caractérisé en ce que** la chambre (10), à part les portions de conduite (12, 14) débouchant dans celle-ci, est fermée, et la première et la deuxième ouverture (16, 18) de la conduite fluidique s'étendant à travers la chambre (10) sont tournées vers le fond (22) de la chambre (10).

2. Amortisseur de pulsations de fluide selon la revendication 1, **caractérisé en ce que** dans une position de fonctionnement de l'amortisseur de pulsations de fluide, une surface en section transversale de la première et/ou de la deuxième ouverture (16, 18) est disposée essentiellement perpendiculairement à une direction de la force de gravité (20).

3. Amortisseur de pulsations de fluide selon au moins l'une quelconque des revendications précédentes, **caractérisé en ce que** la chambre (10) est divisée en deux ou plus de deux chambres partielles.

4. Amortisseur de pulsations de fluide selon au moins l'une quelconque des revendications précédentes, **caractérisé en ce que** le volume de la chambre (10) est revêtu au moins en partie d'un matériau à cellules ouvertes (36), en particulier de mousse.

5. Amortisseur de pulsations de fluide selon la revendication 4, **caractérisé en ce que** le matériau à cellules ouvertes (36) revêt un volume de la chambre (10) qui se trouve entre la première et la deuxième ouverture (16, 18) et le côté supérieur (24) de la chambre (10).

6. Amortisseur de pulsations de fluide selon au moins l'une quelconque des revendications précédentes, **caractérisé en ce qu'**au moins une membrane (38) est disposée et réalisée dans la chambre (10) entre la première, respectivement la deuxième, ouverture (16, 18) d'une part et le côté supérieur (24) de la chambre (10) d'autre part, de telle sorte que la membrane (38) sépare un volume prédéterminé (30) de la chambre (10) du fluide (26).

7. Amortisseur de pulsations de fluide selon au moins l'une quelconque des revendications précédentes, **caractérisé en ce que** le volume de la chambre (10) est au moins en partie revêtu d'un matériau à cellules fermées.

8. Amortisseur de pulsations de fluide selon la revendication 7, **caractérisé en ce que** le matériau à cellules fermées revêt un volume de la chambre (10) qui se trouve entre la première et la deuxième ouverture (16, 18) et le côté supérieur (24) de la chambre (10).
